# EUROPEAN PATENT APPLICATION

(11) **EP 2 611 207 A1**
(43) Date of publication of application: **03.07.2013**
(21) Application number: 12198205.2
(22) Date of filing: 19.12.2012
(51) Int. Cl.: H04N 21/81, G06Q 30/02, H04N 21/478, H04N 21/258, H04N 21/2668

(54) **Cloud-rendered high-quality advertisement frame**

(30) Priority: 29.12.2011 US 201161581213 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A network-based system of providing an advertisement stream to at least one user, the system including a computing cloud receiving different media data from a plurality of advertisement data sources and generating from said media data at least one advertisement data stream to be provided to at least one remote user; a network entity transmitting said at least one advertisement data stream to a user device of the at least one user; the user device displaying the content of the at least one advertisement data stream within a network-based online presentation.

## Description

### Field of the Invention

The present invention relates to a network-based system and to a method of providing an advertisement stream to at least one user. In particular the present invention relates to a network-based system and to a method of providing a live stream containing advertisement data inside a container or frame that can be placed on web pages. Moreover, the invention relates to a system and to a method that provides advertisement by a content stream which is rendered, updated and programmed in a rendering cloud. Thus a live advertisement stream can be provided that refreshes and updates the advertisement independent from the refresh of the web-page and hence delivers highest quality realtime rendering of advertisement streaming to any computer or other media device, such as a web-enabled cell phone or mP3 player.

### Background of Invention

There are known network-based systems and methods for providing advertisement streams to users of a network. Such a system is described in US 7 788 687 B.

There are also known network-based systems and methods for providing cloud computing to a plurality of clients. Such a system is described in US 2010/0257252 A1.

The content of a current dynamic advertisement frame is requested from the webpage running in a browser window. Any rendering of the content is done on the local computer, thus the actual quality depends both on its installed plug-ins and on its performance. A content provider can never be sure if the intended quality is actually presented to the customer.

Even more importantly, the advertisement impression usually depends on the user to request a web-page before a new advertisement is displayed.

### Summary of Invention

According to a first aspect of the invention there is described a network-based system of providing an advertisement stream to at least one user, the system comprising:
a computing cloud receiving different media data from a plurality of advertisement data sources (such as ad servers) and generating from said media data at least one advertisement data stream to be provided to at least one remote user;
a network entity (e.g. at least one ad server) transmitting said at least one advertisement data stream to a user device of the at least one user;
the user device displaying the content of the at least one advertisement data stream within a network-based online presentation, in particular within a webpage and/or a game presentation.

According to another aspect of the invention there is described a method of providing an advertisement stream to at least one user within a network-based system, the method comprising the steps of:
receiving a request to provide and/or update an advertisement stream;
requesting and receiving different media data from a plurality of advertisement data sources and generating from said media data at least one advertisement data stream to be provided to at least one remote user;
transmitting said at least one advertisement data stream to a user device of the at least one user; and
displaying the content of the at least one advertisement data stream within a network-based online presentation, in particular within a webpage and/or a game presentation.

The described system and method offers a refreshed rendering of the stream on the ad-server in real-time, dynamically updating the ad-programming and improving its acceptance quality.

The system and method may generate from any visual or audio advertisement content (static images, 2D and 3D video, audio, application, and so on) a combined media on a rendering cloud that minimizes the performance needs on the client's device. The renderer (rendering cloud) is able to combine different content sources to one stream and can do so individually for every single user. Via feedback from the user, the ad stream can be updated according to the user's demands: both explicit (such as UI-input, mouse clicks, keyword(s)) and implicit (profile, demographic, collected interests). The ad stream can be updated independently from any update or refresh of the web page the stream is embedded in, since its refresh is determined on a separate server and provided through the render-cloud seamless in the stream. A backlog of items to serve to a user may be stored for every user connected to the service. These backlogs can be, but don't have to be, persistent over time, e.g. the cloud server stores this backlog data for a later time when the user log in in the future.

The network entity may comprise at least one ad server and may schedule the transmission of said at least one advertisement data stream to the user device of the at least one user. The network entity may schedule the transmission of said at least one advertisement data stream independently from any update or refresh of the network-based online presentation on the device of the at least one user.

Moreover, the plurality of advertisement data sources and/or the network entity (ad servers) may update the generating of the at least one advertisement data stream in dependency from a feedback of the at least one user and/or from the device. The feedback of the at least one user and/or from the device can include explicit input, in particular input made at the user-interface, mouse clicks, keyboard and/or keyword inputs. The feedback may also include implicit input, in particular user profile data, demographic data, collected data about user's interests.

The plurality of advertisement data sources and/or the network entity can store backlog data, in particular history of content streamed. Further to this, the plurality of advertisement data sources and/or the network entity can continuously update the stored backlog data.

### Brief Description of Drawings

Further features and advantages of the present invention, as well as the structure and operation of various illustrative embodiments of the present invention, are described in detail below with reference to the accompanying schematic drawings, wherein:
- Fig. 1: shows a system structure for a preferred embodiment of a system according to the present invention.
- Fig. 2: shows a flow chart for implementing said embodiment of the present invention.

### Detailed Description of Preferred Embodiments

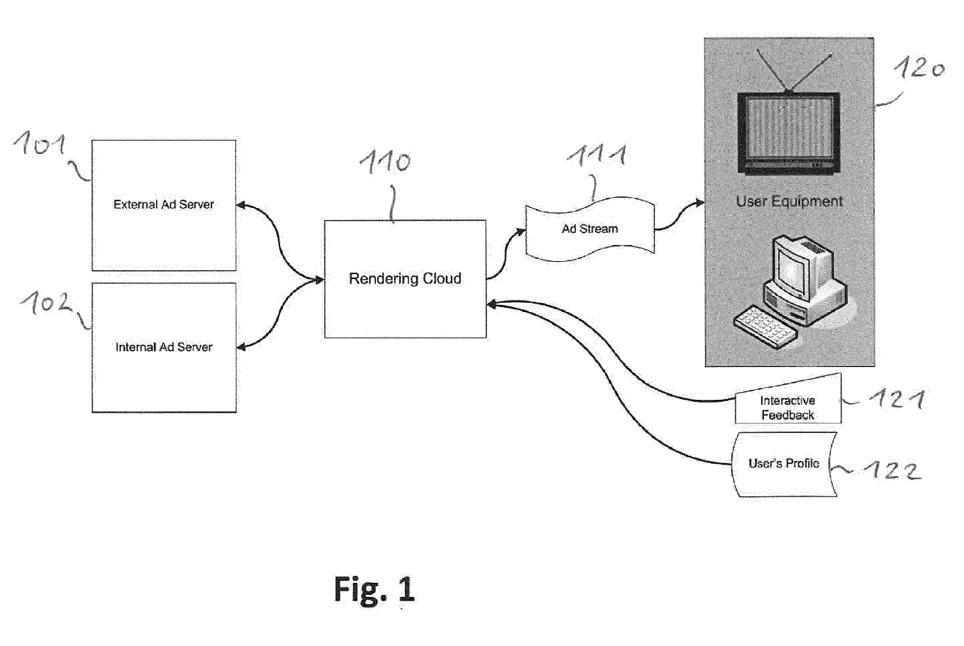

As shown in Fig. 1 the described system 100 uses a rendering cloud 110 that runs on a rendering cloud, providing an optionally interactive ad stream 111 to user equipment or client device 120. The ad stream 111 is comprised of any kind of media (video, banner, text, non-animated or animated 2D and 3D graphics, audio) delivered on the user's equipment 120 (such as a PC, a media player, a television or any other kind of media equipment). The rendering cloud 110 gets its content (videos, banners, text, graphic, audio) from internal or external sources such as ad servers 101 and 102. On request of either the webpage or the user (see feedback 121), the rendering cloud computes the individual combined stream content. It's a combined content, i.e. a cloud-rendered single image containing (possible) multiple advertisements in one data-transfer. If it's a continuous stream, it can either be multiple streams overlaying each other, or one stream after the other. With the term "ad stream" the logical item of the multimedia stream is described that is generated in the render cloud and then transferred to the user's equipment.

Further to this, the rendering cloud 110 has an advertisement programming that is not request based, but logic based. This can include time, user-input and keywords to define the output of the stream. For example, the website may be static but the ad stream may update its advertisement live and independently from the website's update mechanic. The rendering cloud 110 schedules these advertisements by the use of keywords entered by the user, analysis of user information (see user's profile 122) or pre-defined ad-server logic.

Internal servers are those running the webpage that is being browsed - these will often showcase other contents/products from that web page. External servers are controlled by an external ad agency or agencies, or other advertisement deliverers. There is no limit to the number of servers that can feed the ad stream with external content.

The invention also provides user input and interaction:
Ads can include (but are not limited to) still images, videos, trailers, game demos, fee-to-play games and any imaginable
interactive content. Content will be also composited together on the renderer. The user can be invited to click on the ad where appropriate, with examples including playing a game demo, registering interest in either the product or the ad or simply buying the product. These feedback actions (i.e. mouse clicks) are transferred to the rendering cloud in order to be actioned, and the ad stream then changes to reflect the new information. When the user interacts with the ad stream, it will also send his user profile back to the server via the render cloud, allowing easier transactions where applicable and enabling the server to select ads that will appeal to the user in the future.

An example, the following use case "free game demo" will be described here:
If the user plays a game demo, the rendering cloud will record and action any data (input via a mouse, keyboard or game controller) that the user enters to play the game. At the end of the demo, the user could be offered the chance to buy the game - if he says "yes", the ad stream will respond, changing from a promotion of the game and instead reflecting information that is relevant to the user now he is buying it. This could include a download screen or a table in which he can enter his bank and/or shipping details. However, should the user decline to buy the game, he may be asked his reasons why not, allowing the system to discern what about it he doesn't like and therefore select another game that will better appeal to him.

Similarly, should the system play the same ad on a set number of occasions and it is ignored by the same user each time, the system can ask the user if he is interested in that content. Should he say no, the system will know to stop playing it and select another, and can also use that data to better target the ad stream in future.

The invention also provides the feature of Ad selection:
Ad content can be selected in one of two ways to better appeal to the user. If the user is logged in to a website for which he has a profile (i.e., the system knows that it is him), it will select ads that will interest said user based on his profile and past activity. Alternatively, if the user is not logged in (meaning that the system does not have any specific information about him), ads can be selected at random but will more likely be presented based on the web page he is browsing or the search terms he has entered. In this case, ads can be targeted based on a portrait of the typical user of that webpage or those search terms and could even be refined by the system with reference to the profiles and past activity of users who have browsed/searched that same thing. After the stream starts, the system can begin collecting data about the user, thus creating a temporary profile by requesting feedback from the user about the displayed content to improve the targeting of content towards that user.

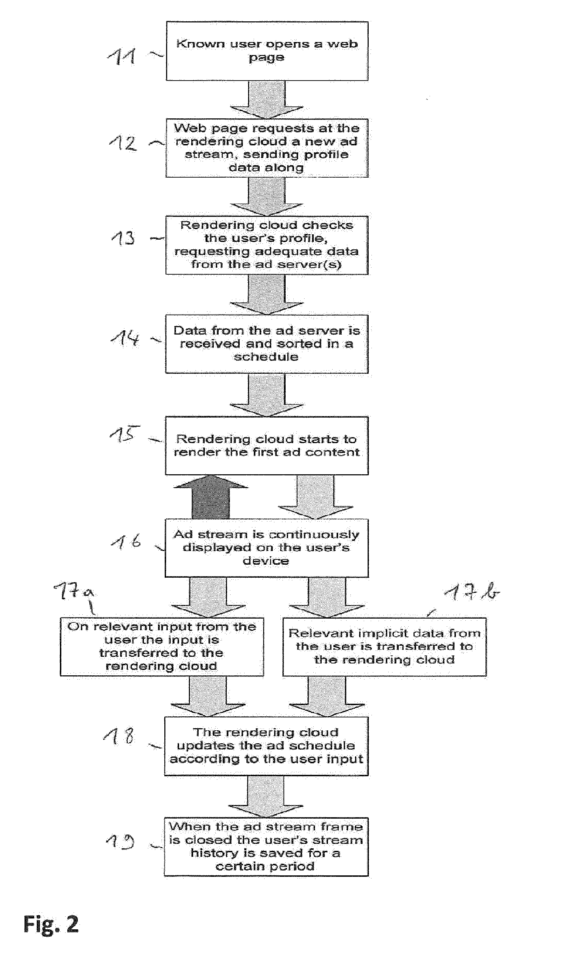

In Fig. 2 a flowchart of the method of providing an advertisement stream to at least one user within the network-based system is shown. The method 10 comprising the following steps 11 - 19:
In a first step 11 the user browses and opens a webpage on the display of his/her device. Then, in step 12, the webpage request will also reach the rendering cloud (see 110 in Fig.1); the request will be sent along with profile data from the user's profile (see 121 in Fig. 1). In a next step 13 the cloud computers will check the user's profile and then will request adequate data from the data sources (see 101 and 102 in Fig. 1), i.e. from internal and/or external ad servers. In a further step 14 these data are received and sorted in a schedule. Them the rendering cloud starts to render the first ad content (see step 15). In a next step 16 the ad stream is continuously displayed on the user's device (e.g. PC, laptop, smartphone). Then in step 17a any relevant input (explicit input) from the user is transferred to the rendering cloud. Alternatively or in parallel the step 17b is performed to transfer relevant implicit input data from the user to the cloud. Afterwards, in step 18, the cloud updates the ad schedule according to the received user input(s). Finally, in step 19, the history of the user's ad stream is saved when the ad stream frame will be closed.

The method basically performs the receiving of a request to provide and/or update an advertisement stream (step 12); the requesting and receiving different media data from a plurality of advertisement data sources and generating from said media data at least one advertisement data stream to be provided to at least one remote user (steps 13 - 15); the transmitting said at least one advertisement data stream to a user device of the at least one user and the displaying the content of the at least one advertisement data stream within a network-based online presentation (step 16).

Within the method of providing said ad stream there may be implemented the checking control data, in particular of user's profile data, feedback data and/or backlog data for generating and/or scheduling the at least one advertisement data stream (steps 13); the storing and/or updating backlog data, in particular history of content streamed (step 19); and the updating the generating of the at least one advertisement data stream in dependency from a feedback of the at least one user and/or from the device (step 18).

When referring to step 13 - 15, the details of the rendering of the ad stream may be as follows:
The ad stream is constructed in real-time, taking the profile and other data of the user into account. Based on the data, the server creates a backlog of ad items to play, sorting them from highest to lowest probability to fit the recipient's profile. This backlog is updated in realtime to include the latest ads that are stored on the server.

Depending on the available content, the ad stream can also include free content such as games, videos, news and so on. The selected ads are then rendered as a video/audio stream, using one item after the other of the backlog of items that might suit the user.

One very important aspect of the invention is that although different sources can be rendered and streamed, the main advantage is to combine these single sources to one stream, for example thus having in one video stream a composite of a game running, above the game window runs an animated advertisement, while on the left side a still picture ad banner is placed.

The renderer is able to combine separate content from the storage servers to a new composite content or image. For example, it could fetch single still images stored on the server and create a composite image for the stream, in which one image serves as a background while others are animated in front of it. Additionally, text can be added as well. Still images are also transferred as a video stream, although the video compression recognizes if no changes are applied to the image and will save bandwidth automatically.

The renderer can also combine more than one video to the ad stream in different ways, for example by presenting two videos side by side, picture in picture, above and below or in any other formation.

The invention also provides changes in the ad stream as follows:
As soon as the user inputs feedback, the backlog can be updated and the render schedule will reflect the changes. This is called explicit input from the user (e.g. entered keywords, answered questions). Any implicit input collected by the page, renderer or the browser (e.g. the behavior of the user or his profile) will also be used to update the ad stream.

On the user's device, the ad stream will be displayed inside a frame in the browser application. The update of the ad stream is independent from other content displayed in the browser.

When referring to step 19, the details of closing the ad stream may be as follows:
Upon closing the frame on the user's device, the stream will stop to be rendered. The generated history of content streamed will be stored for a certain period of time to allow the user to pick up the content stream later.

Any relevant changes of the user's behavior that will improve the targeting of the user will be added to the user's profile.

## Claims

1. A network-based system of providing an advertisement stream to at least one user, the system comprising:
a computing cloud receiving different media data from a plurality of advertisement data sources and generating from said media data at least one advertisement data stream to be provided to at least one remote user;
a network entity transmitting said at least one advertisement data stream to a user device of the at least one user;
the user device displaying the content of the at least one advertisement data stream within a network-based online presentation.

2. The network-based system of claim 1, wherein the network-based online presentation is a webpage and/or a presentation of a game.

3. The network-based system of claim 1, wherein the different media data comprises video, audio, still images and/or graphics.

4. The network-based system of claim 1, wherein the plurality of advertisement data sources comprises at least one ad server.

5. The network-based system of claim 1, wherein the network entity comprises at least one ad server.

6. The network-based system of claim 1, wherein the network entity schedules the transmission of said at least one advertisement data stream to the user device of the at least one user.

7. The network-based system of claim 6, wherein the network entity schedules the transmission of said at least one advertisement data stream independently from any update or refresh of the network-based online presentation on the device of the at least one user.

8. The network-based system of claim 6, wherein the plurality of advertisement data sources and/or the network entity updates the generating of the at least one advertisement data stream in dependency from a feedback of the at least one user and/or from the device.

9. The network-based system of claim 8, wherein the feedback of the at least one user and/or from the device comprises explicit input, in particular input made at the user-interface, mouse clicks, keyboard and/or keyword inputs.

10. The network-based system of claim 8, wherein the feedback of the at least one user and/or from the device comprises implicit input, in particular user profile data, demographic data, collected data about user's interests.

11. The network-based system of claim 1, wherein the plurality of advertisement data sources and/or the network entity stores backlog data, in particular history of content streamed.

12. The network-based system of claim 11, wherein the plurality of advertisement data sources and/or the network entity continuously updates the stored backlog data.

13. A method of providing an advertisement stream to at least one user within a network-based system, the method comprising the steps of:
receiving a request to provide and/or update an advertisement stream;
requesting and receiving different media data from a plurality of advertisement data sources and generating from said media data at least one advertisement data stream to be provided to at least one remote user;
transmitting said at least one advertisement data stream to a user device of the at least one user;
displaying the content of the at least one advertisement data stream within a network-based online presentation.

14. A method of claim 13, further comprising at least one of the following steps:
checking control data, in particular user's profile data, feedback data and/or backlog data for generating and/or scheduling the at least one advertisement data stream;
storing and/or updating backlog data, in particular history of content streamed;
updating the generating of the at least one advertisement data stream in dependency from a feedback of the at least one user and/or from the device.
